# EUROPEAN PATENT APPLICATION

(11) **EP 2 499 907 A1**
(43) Date of publication of application: **19.09.2012**
(21) Application number: 11158805.9
(22) Date of filing: 18.03.2011
(51) Int. Cl.: A01K 1/03

(54) **Cage laboratory**

(71) Applicant: Tecniplast S.p.A., 21020 Buguggiate (IT)
(72) Inventor: Bernardini, Pietro, 21020, Crosio della Valle (IT); Malnati, Giovanni, 21046, Malnate (IT)
(74) Representative: Lualdi, Lorenzo

(57) **Abstract**

The present invention relates to an animal caging system (1) comprising a standard rack (2) for animal cages (100) commonly used in vivarium facilities. The system according to the present invention is characterized in that it comprises a detachable breadboard (3), separated from said standard rack (2) and provided with a plurality of universal sockets (3a) to which several devices (10, 20, 30, 40) for the detection of cage condition and/or for the active control of the micro-environment of said cage (100) are connected. The animal caging system according to the present invention therefore allows the separation of parts of the caging system directly interacting with animals, and that need to be autoclaved, from system parts that do not interact with animals directly.

## Description

### FIELD OF THE INVENTION

The present invention concerns an animal caging system, of the kind used in the vivarium facilities for storing animals in specially designed cages, which comprises a breadboard suitable to connect cage level monitoring and control devices.

### PRIOR ART

In the field of animal management, specifically that of laboratory animals such as rodents, environment inside the cages must be tightly controlled to prevent contaminations of the animals by the external environment and/or contamination of the environment and humans by the animals.

Research animals are becoming more valuable because many disease models are expensive and time consuming to develop on animals and some animals may have gone through longitudinal studies accumulating valuable long term data from experiments thus making them extremely critical to basic science research and medical device and drug development programs.

Most research institutions would invest significant amount of resources to safe keep these valuable animal assets. A vivarium facility, comprising the shelving storage and the cages, is a repository where researches store their valuable animals. Individually ventilated cages ("IVC") and rack systems are widely used for housing laboratory animals that enable a plurality of such animal cages to be arranged in an industrious and efficient manner. These systems are designed for providing a highly consistent environment across all cages on each rack. Nonetheless, it is not uncommon that one single rack would house animals from multiple study protocols that may have different controls and environmental requirements. Therefore, there is a need for a highly adaptable caging system that can provide researchers and vivarium management flexibility to accommodate such emerging market needs on a single rack system.

Furthermore, some vivarium facilities support "long term studies", where a "long term studies" is defined as a research study that involves research animals monitored by recording devices and necessary equipment to collect data either continuously or at pre-set intervals from animals or from sensing instruments surrounding the animals. The duration of such studies may last for a workday (at least 8 hours) to the maximum lifespan of the animals being studied.

Cage level monitoring devices have been evaluated and sometimes adopted on limited scale for decades to provide precise measures and controls of micro-environment and sometimes even the animals inside. The basic concept of an operant cage is almost a century old. However, deploying active monitoring on a large and industrious scale has been inefficient and challenging because of cost and reliability issues.

One challenging issue is to satisfy stringent cleaning requirements of monitoring and control equipment on large scale. Some electronic equipment is hard to decontaminate. Some may not withstand harsh cleaning agents or methods. More and more sophisticated animal models are developed with animals that have immune deficiency, multiple diseases, etc. making these animals extremely sensitive to the cleanliness of the cage micro-environment. A lot of resources are dedicated to minimize cross-contaminations between cages and groups of animals from different study protocols. Therefore, there is an unmet need for an efficient way to keep monitoring equipment and devices around and near each cage clean. Many modern vivarium facilities use sophisticated technologies to provide consistently high quality of care for these valuable animal assets. Besides housing, another area is in providing quality drinking water to every cage with methods such as water packs, automated filled water bottles, and automatic watering systems. These watering methods typically are very reliable. However, their failures can cause cage flooding which may lead to animal distress or even death from hypothermia or drowning. Therefore, there is a market need for a highly reliable and specific flooding detection and warning system to safeguard against potentially devastating loss of animal assets.

Another important drawback afflicting the vivarium facilities known from the prior art, consists of lighting controls. Most vivarium facilities known in the art have holding rooms that typically have ceiling mounted lights for day/night cycle with white lights and for working during animal's night cycle with red lights. In most holding rooms, the light level has to meet regulatory requirements.

Since most facilities use ceiling mounted light fixtures, cages placed at the top of a rack see a much higher light intensity than those cages at the bottom. Some research animals, especially those who are albino, may have their vision permanently disrupted if their retinas were exposed to high level of light over an extended period of time thus affecting animal health and behaviour. Furthermore, it has also been noted that flickering light sources, like that from a fluorescent light bulb, would cause stress on animals. Nonetheless, many facilities would use fluorescent light sources because of their energy efficiency.

Light cycle errors sometimes can happen where room white light is stuck on for an extended period of time. When not corrected, animals can be stressed and their general and mating/parenting behaviours can be negatively affected.

In addition, many vivarium facilities seek cost efficient ways to increase its cage density (number of cages per unit space in a facility) to improve capacity. One way to achieve this is to place racks closer to each other; one excellent example is the library caging system realized by the present applicant. By doing so, ceiling mounted lights would not be able to provide sufficient lighting to reach cages with high density of racks. Therefore, there is an unmet need for cage level lighting that would allow for high density and possibly movable racks that are packed very closely to each other in a vivarium facility.

Besides housing, cage level lighting is becoming an important consideration for researchers to extract useful data from animals. Some researchers would use infrared lighting as illumination to video-record animal behaviour in a home cage environment. Infrared is used because most rodents are less sensitive to such wavelength range thus allowing researchers to monitor behaviours with cameras without artificially disturbing animals. Similarly, other researchers may use different colours of light as excitation sources for fluorescence interrogation of physiological parameters or biomarkers expressed by research animals. Therefore, there is a need for a flexible lighting system that could be reliably and cost-effectively implemented in a home cage and large scale animal research setting.

Lab animal housing requirements are higher with the need for devices to offer monitoring and control of micro-environment with objectives for both reducing research variations by employing strategies to provide consistent micro-environment of the cage, and to monitor micro-environment and detect unexpected issues early so that expensive and valuable animal models are not lost. This allows the outbreaks prevention and a more active and reliable control of the cage/animals parameters. As research animals becoming more valuable, researchers are increasingly more interested in using monitoring equipment to extract useful data in a home cage environment.

The technical solutions already known from the prior art fail to provide a flexible and scalable platform for managing monitoring devices. The need is for a platform that is practical for large scale data collection from a large array of cages and also for cleaning requirements of such and for maintenance/well integrated with modern vivarium and research labs.

To increase capacity and quality for monitoring these valuable research animals, there are some basic needs such as light controls, water quality and safety to animals.

Cage level lighting has been used for illuminating and for research purposes for many decades. For some aquatic housing system, there are LED lights at the rack or cabinet level.

Cage level monitoring has become more and more sophisticated. There is a need to adopt reliable and low cost and yet sensitive sensors to detect animal and cage conditions.

### SUMMARY OF THE INVENTION

It is therefore the aim of the present invention to provide an animal caging system comprising a breadboard suitable to connect cage level monitoring and control devices with sophisticated control systems and data collection electronics.

Within this aim, it is an object of the present invention to provide an animal caging system that provides special means to make cage level monitoring and controls in a reliable, cost effective, and flexible fashion to overcome the above mentioned drawbacks afflicting the known solutions.

Within the scope this aim, it is a further object of the present invention to provide an animal caging system provided with active monitoring and control of the micro-environment of the cage.

It is another object of the present invention to provide an animal caging system which comprises a lighting system that is flexible and dynamic not just for improving animal care and husbandry efficiency in a vivarium but also for researchers to enhance their research capabilities.

Not least, another object of the present invention is to provide an animal caging system with a specially designed lighting-system which can be programmed in order to obtain different lighting configurations and levels on the rack, i.e. per-row or per-cage, so that consistent and sufficient illumination is available for both research and housing requirements.

This aim and these objects, and others that will be more clear after the detailed description of a preferred embodiment of the present invention, are achieved by an animal caging system comprising a standard rack for animal cages (such as an IVC rack, as an example Tecniplast Green Line GM500) provided with a detachable breadboard that is designed to be "dockable" from said rack, is being characterized in that said breadboard comprises a plurality of universal sockets to which several different types of devices such as electronic means and sensors for monitoring and control of the rack and its micro-environment, as well as apparatus vital to supporting drinking water and conditioned air to each cage. Here "dockable" is defined as the said breadboard can be readily attached and detached from the standard rack for housing.

Mating hardware on breadboard and the corresponding reciprocating hardware on the standard rack are designed to allow end users (namely vivarium and researcher staff) to dock the breadboard and the standard rack so that together the devices on the breadboard would work effectively as a caging system. When needed, end users can remove the breadboard from the standard rack for activities such as setting up devices on the breadboard and cleaning and decontaminating breadboard and devices separately from the standard rack.

The same aim and objects are achieved by an animal cage provided with specially designed features in order to be associated to said rack and breadboard.

### DESCRIPTION OF THE DRAWINGS

Further characteristics and advantages of this invention will become clear from the following detailed description of a preferred embodiment that is merely illustrative and not limitative and is shown in the figures that are attached hereto, in which:
- figure1 shows a prospective view of the animal caging assembly according to the present invention;
- figure 2 shows the animal caging assembly of figure 1 in a partially disassembled lateral view;
- figure 3 shows a perspective view of figure 2;
- figure 4 shows a detail of the breadboard of the animal caging system according to the present invention;
- figure 4a shows a partial rear view of the breadboard of figure 4;
- figure 5 shows a detail of the breadboard of figure 4;
- figure 6a shows a detail of a single place for a cage of the breadboard of the animal caging system according to the present invention according to a first embodiment;
- figure 6b shows a detail of a single place for a cage of the breadboard of the animal caging system according to the present invention according to a second embodiment;
- figure 6c shows a detail of an animal cage suitable to be associated to the caging system according to the present invention, inserted in a rack portion associated to a single place of the breadboard;
- figure 7 shows a lateral side view of figure 6c;
- figure 8 shows a partial cross section of the lateral view of figure 7;
- figure 9 shows the bottom surface of an animal cage suitable to be inserted in the caging system according to the present invention;
- figure 10 shows a detail of an animal cage suitable to be inserted in a rack portion associated to a single place of the breadboard according to the present invention;
- figure 11 shows a detail of the cover of the animal cage suitable to be connected to the caging system according to the present invention.

### DESCRIPTION OF THE INVENTION

According to a preferred embodiment of the invention, illustrated in the mentioned figures, the animal caging system **1** according to the present invention comprises a standard rack **2** suitable to support a plurality of animal cages **100**, and a separate, independent breadboard **3** equipped with a plurality of universal sockets **3a** to which several different devices **10**, **20**, **30**, e.g. sensors **10** and lighting **20**, are connected.

According to the present invention, the breadboard can be designed to accommodate and support devices that are electronics in nature such as sensors and lighting, electro-mechanical in nature such as electro-mechanical based interlocks, and/or mechanical in nature such as plumbing connections for drinking water and for air handling valves and devices.

The breadboard **3** according to the present invention includes several innovative concepts that will be stressed here below.

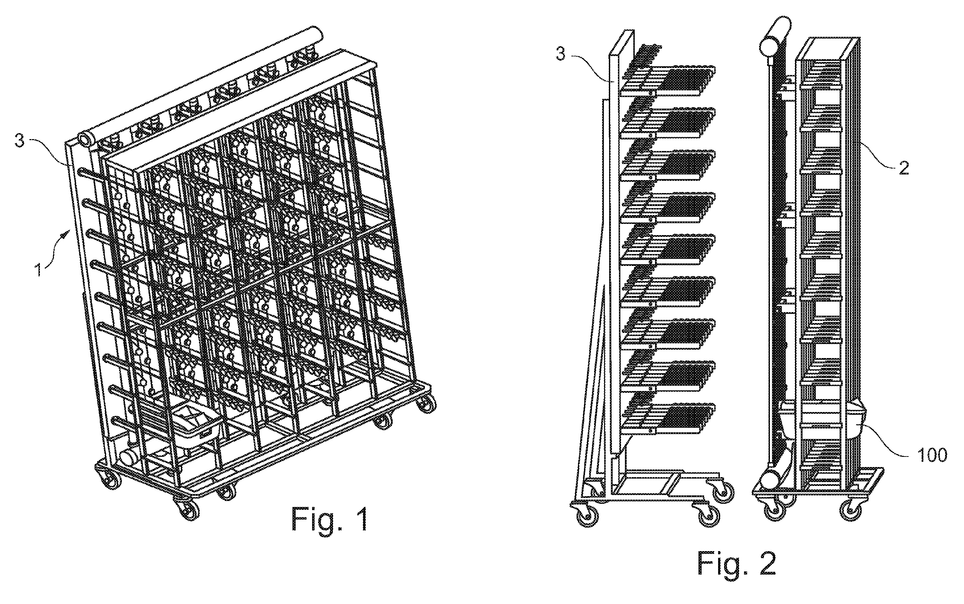

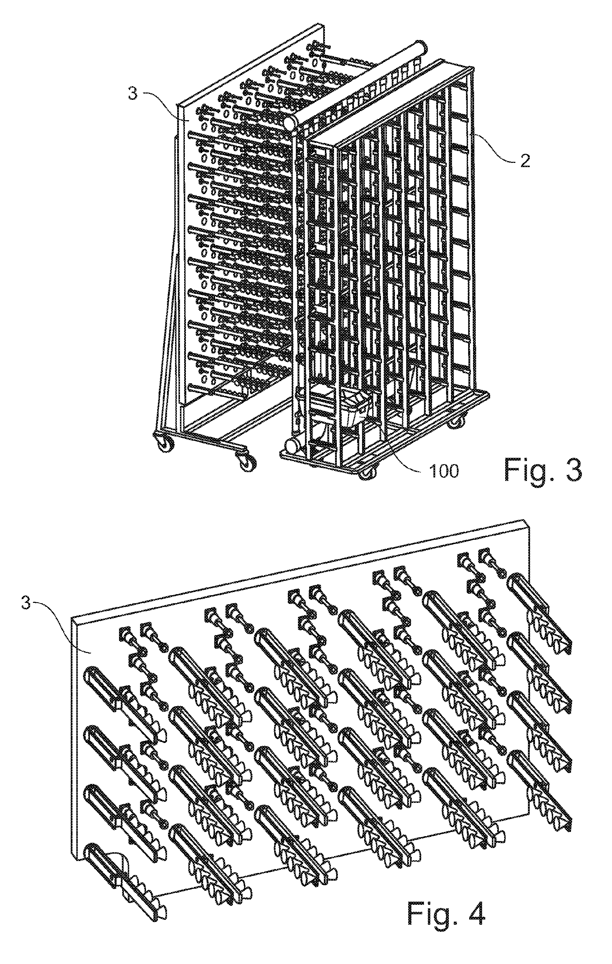

First of all, the breadboard **3** is completely separated from both the standard rack **2** and the devices **10**, **20**. With reference to figures 2 and 3, it can be easily noted that the breadboard **2** and the standard rack **2** are physically two separate entities, and both of them may be mounted on wheels as shown in figure 2.

The breadboard can be in the form of a platform which can be positioned at the rear side of the standard rack or, in an alternative embodiment, it can be arranged in a different manner with respect to the rack provided that it physically protrudes into the space between cages (left and right as well as top and bottom) thus surrounding the cage. Several different embodiments of the present invention can therefore be considered without departing from the scope of protection of the claims.

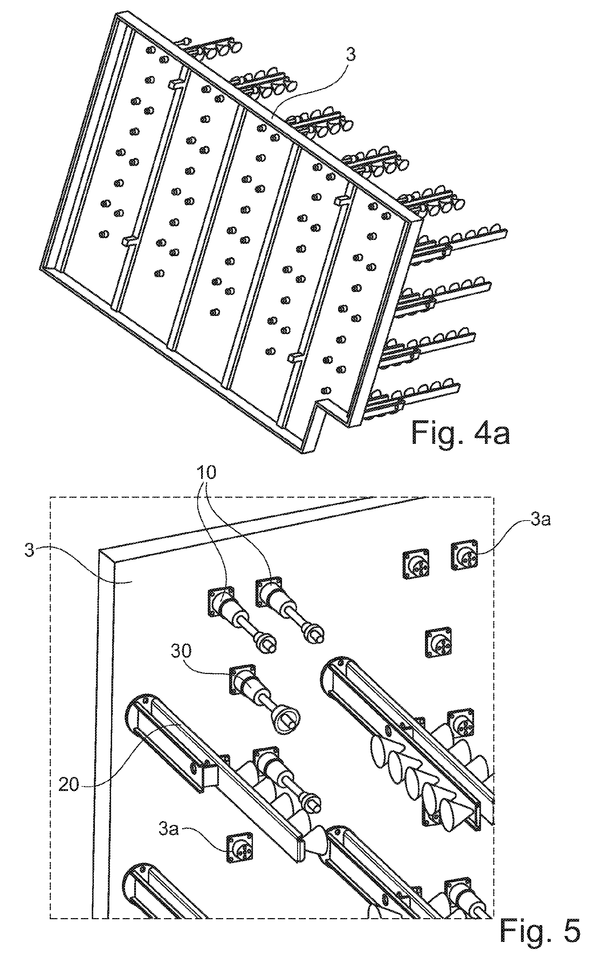

With reference to figure 4, the breadboard **3** according to the present invention is illustrated to support electronic devices and equipment. The breadboard itself is an enclosure that contains inside all the cabling and appropriate electronic components. In general, there could be different configurations of the breadboard depending on end user's needs. For a simple configuration, the breadboard could be a simple conduit connecting the sensors attached to the breadboard and controller and monitor systems outside of the breadboard. For more sophisticated data acquisition applications the electronic components may include circuit boards for devices to support sensors such as power supplies and pre-amps.

A key advantage of this design is that the said electronic components are contained to minimize electrical hazard to users and animals, and potential contaminations from handling by users.

The separation between the standard rack **2** and the electronic breadboard **3** is a main design concept of the animal caging system according to the present invention.

Another key advantage of the breadboard is the separation of electric/electronic parts from autoclavable/mechanical parts. The electronic breadboard **3** is provided with a plurality of universal socket **3a** suitable to connect, in a removable manner, the electronic sensors **10**, and lighting **20**. Therefore, the electronic parts connected to the breadboard **3** in an operative configuration, can be removed from the breadboard in order to be autoclaved.

As it is shown for example by figure 5, the breadboard **3** may be provided with several electronic means, i.e. sensing and lighting means, at the place of a cage. Any socket can host different types of sensors in the same single place for a cage, so that any cage can interact with a plurality of electric/electronic means at the same time.

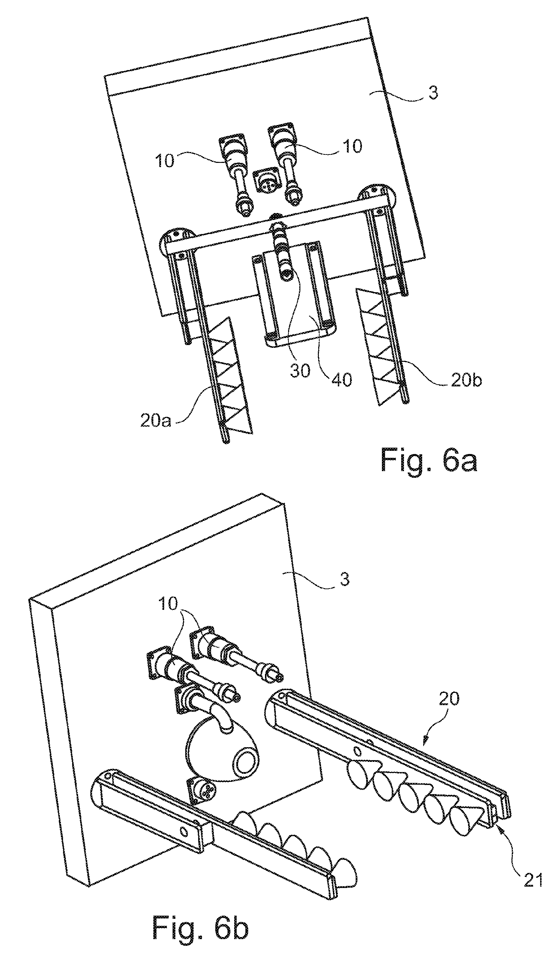

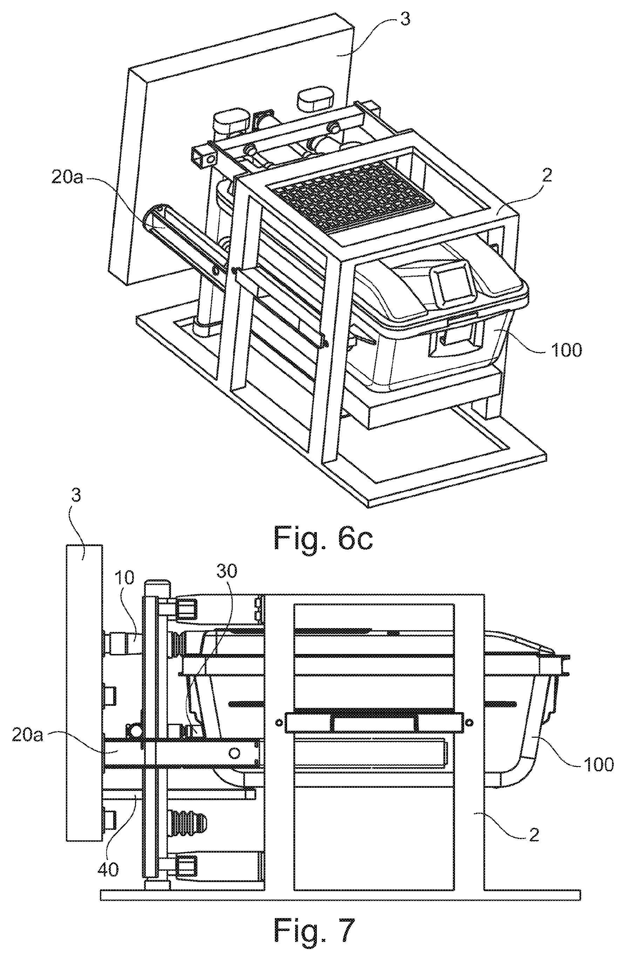

As an example, on figure 6 is shown a single place for a cage **100**.

The cage **100** is inserted in the standard rack **2** which is associated with the detachable breadboard **3** thus providing the electric/electronic sensing means **10**, **20**. Such means comprise sensors suitable to detect/measure physical and/or chemical parameters of the micro-environment of the cage.

Such breadboard system would enable high throughput data acquisition and monitoring of animals in a large array of cages. The measurements carried out by such sensing means could be used for ensuring a consistent micro-environment immediately surrounding the animal(s) e.g. temperature, airflow, humidity, lighting, sound and vibration; controlling the availability of food and/or fluids, e.g. drinking water, to the animal(s) to ensure a consistent or user-defined feeding and fluid intake schedule suitable for a long-term study and/or the user's experimental requirements; controlling stimulants in the micro-environment to incite certain behaviours from the animal(s) with the objectives of testing animal response, and conditioning the animal(s) suitable for research or other commercial applications. The data could be further used for monitoring the micro-environmental parameters with the objective of providing a close-loop feedback control for ensuring the parameters are within the pre-set ranges thus reducing experimental variations; monitoring the well-being of animals with the objective of remote monitoring of animals so that they would not be disturbed as in the case of a person performing (daily or multi-times per day) visual health checks or inspection of a cage; monitoring physiological parameters of animal(s) that may be useful for experimental purposes, for characterizing an animal strain or phenotype, or monitoring the well-being of animals to ensure the success of a research study; monitoring behavioural parameters of animal(s) that may be useful for experimental purposes, for characterizing an animal strain or phenotype, or monitoring the well-being of animals to ensure the success of a research study; monitoring biological or disease process whether it is induced or naturally occurs to ensure the success of a research study.

According to the detail shown on figure 6a, every single place of the breadboard **3** is provided with one or more electronic means **10**, **20**, **30** eventually with additional universal sockets **3a**, with lighting means **20**, with mechanical connections for an automatic watering system device **30**. Additionally, the breadboard according to the present invention may be also provided with system means **40** for the automatic detection of bedding condition or of a flooding condition in the cage. It is also conceivable that one embodiment of the breadboard would allow for integration of mechanical connections for directing air flow to a cage. This further illustrates a key attribute of using the breadboard as a general platform for most devices that are not part of housing.

The animal caging system **1** according to the present invention is therefore provided with a plurality of electric and/or electronic means **10**, **20**, **30**, **40** adapted to monitoring/control the cage environment.

Every electronic sensor or electric device **10**, **20**, **30**, **40** is provided with a universal socket suitable to be connected to the universal socket **3a** of the breadboard **3**. All the cables remain inside the breadboard **3** and, therefore, there are minimal risks for the user.

It is also conceivable that one design of the breadboard has an electro-mechanical interlock at each cage, when engaged, would discourage un-authorized access and removal of the cage. The interlock mechanism can be implemented with a solenoid device that is connected to an external controller unit that has access to a database of authorized individuals with well defined control access levels to each cage.

The breadboard system according to the present invention is therefore designed to separate housing where animals have directly interactions with cages and items within the cage, from devices and appliances.

A detachable breadboard that docks with a caging system which comprises a cage and a rack allows to offering monitoring devices with the existing single-sided rodent caging systems, thus addressing the needs for easy connection with current standard racks. Additionally, the detachable breadboard allows easy cleaning of the caging system according to the present invention due to the fact that the breadboard and its devices can be separated from housing rack so that the devices may not have to experience harsh cleaning requirements typical for the caging/housing system thus enabling the use of more electronic-equipment friendly cleaning methods such as hydrogen peroxide and, at the same time, enabling the use of lower cost materials to build such components and devices since they would not be exposed to harsh cleaning environment that may cause pre-mature degradation of such components/devices.

Another advantage achieved by the present invention by means of the presence of a separated breadboard is to simplify the configuration of the devices mounted directly on the breadboard compared to mounting devices directly to a cage.

As a further notice, the breadboard could have different configurations.

More in details, the breadboard could be monolithic for the whole rack and could for example be mounted on a movable trolley for simple transportation or, as an alternative embodiment, the breadboard could comprises several modular breadboard components that fit together based on a consistent locking interface that allows the components to connect with one another to build a larger breadboard. According to this configuration, each component is a modular block provided with interlocking means and the components could also have different sizes, the smallest component being one that fits behind one cage. In this way, a smaller facility may use only a few components to form a breadboard for a small number of cages on the rack.

Overtime, when the facility is ready to expand, it may acquire additional modular components to create a larger breadboard, in a flexible manner.

Furthermore, the breadboard components may have different specific connectors and technical requirements depending on specific needs. The components can be assembled and configured into different sizes and combinations thus offering flexibility and scalability.

Each component of the breadboard, or each part of the breadboard in case of a monolithic breadboard, may offer the followings: electrical connections for powering electronic devices and communicating data from devices for cage level monitoring and data acquisition with a controller unit, mechanical connections for electromechanical devices such as interlocks and mechanical connections for plumbing of water and air to the cages.

Several other electronic means can be connected to the breadboard in order to provide the place of a cage with utilities suitable to monitoring not only the environmental condition of the cage but also the behavioural parameters of the animals that may be useful for experimental purposes, for characterizing an animal strain or phenotype, or monitoring the well-being of animals to ensure the success of a long term study.

Furthermore, the breadboard may be provided with proximity sensor suitable to reveal the presence of the cage in its place on the rack. A proximity sensor could, for example, communicate the presence of a cage in every cage-place and communicate with an integrated control unit, provided with dedicated software, which allows to monitoring not only the presence of the cage but to memorize how many times the cage is removed from the rack, thus allowing to track the movement history of each cage.

Additionally, the breadboard of the animal caging system according to the present invention may be provided with a controlled access system, suitable to provide security measures against un-authorized access to animal cages on a cage rack, to allow for communication with facility controlled access system to alarm appropriate personnel in case of security breach, and/or to enable an authorized individual to easily and quickly identify which cages he may have access to or he may need to direct attention.

The controlled access system may comprise on the cages an identifier, which can be used as a cage serial number. This identifier could be a bar code or a RFID or similar devices, which can be will be read by corresponding access means provided on the breadboard.

The present application also describes a novel method and device to detect the environmental condition inside each cage. A prime example for such application is to detect an unusual amount of water accumulated at the bottom of a cage. As it has been said, one of the most devastating problems is cage flooding from a spilled water bottle/sack or from a valve or connection failure with an automatic watering system.

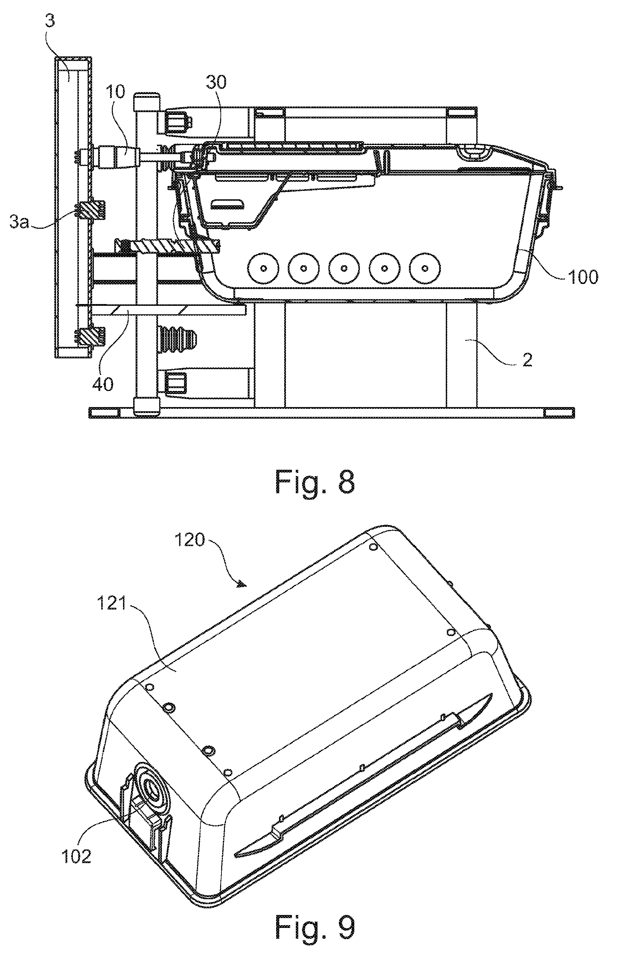

As shown for example in figures 8 and 9, on the bottom external surface of the cage **100**, cage means **101** for automatically detecting the bedding condition with respect to humidity or a flooding condition in the cage are provided.

More in details, such cage means composed of embedding at least two electrodes at the cage bottom. Each pair of electrodes allows interrogation of the average electrical properties of materials between the electrodes. The electrodes are made of a highly conductive material, e.g. a metallic material. In general, this invention enables measuring impedance (with direct current DC and/or alternating current AC) of the target material inside the cage. Different frequency may be used with the same set of electrodes to measure different aspects of the condition side the cage. In its simplest form as described below, electrical resistance can be used to measure and detect excessive water being accumulated between electrodes inside the cage.

One specific embodiment uses two electrodes which could be in the form of buttons or pins **101**, spaced by approximately 50 mm one to each other and projecting inside the cage in the region of the automatic watering system device **30**.

The electrodes should be positioned on the external surface of the bottom wall **121** of the base part **120** of the cage, projecting inside the cage.

On the external side of the cage, said buttons or pins **101** are electrically isolated from the cage by means of elastomeric washers, thus not compromising the possibility for the cage to be autoclaved during standard sterilization process.

The cage means **101** for automatically detecting a flooding condition in the cage are coupled, when the cage is inserted in the animal caging system **1** according to the present invention, to the system means **40**, provided on the breadboard **3**, for the automatic detection of cage condition.

More in details, the cage means **101** and system means **40** are suitable to detect the bedding condition, in particular with reference to the moisture degree of the bedding, and/or to detect the presence of water in a cage even in the case that the cage is not filled with bedding material.

By monitoring the impedance of said cage means **101**, it is therefore possible to instantly and reliably detect the humidity level of the bedding and/or to promptly detect a flooding condition.

According to a preferred embodiment of the present invention shown in the figures, the system means **40** comprise an electro-conductive plate **40** adapted to contact both said buttons or pins **101**, thus closing the electric circuit between the pins **101** and measuring the electric resistance between the pins.

Since most drinking water contains trace level of mineral salts, the pins allow the current passage, and therefore the electric resistance between the pins can be measured. Essentially, resistance can be used as a potential proxy for water accumulation inside the cage with or without bedding. Note that cage flooding usually happens when there is a sudden increase in the amount of water inside the cage due to malfunction of the drinking water source. One aspect of the invention here is to measure the rate the resistance changes over time. A rapid decrease in resistance would indicate a possible cage flood. Such detection would be monitored by an external controller which can be connected to a warning system typically found inside a vivarium facility.

To illustrate the effects of this invention, we have conducted experiments by comparing the effects of dry and wet bedding inside a cage equipped with electrodes. With dry bedding, the measured resistance is about 50 MOhm, while soaking wet bedding, the resistance is about 50 kOhm. The difference in the measured values is a few orders of magnitude therefore very significant, and the bedding condition can be easily detected.

Additionally, measuring the electric resistance between the pins of the cage can be used not only to detect a flooding condition of the cage but also provide a very reliable indication of the bedding condition.

In fact, it is common for vivarium facilities to schedule their periodic changing of the bedding, usually every fourteen days for IVC. Therefore, they use to change the bedding of the cage, i.e. they remove the cage from the rack and move the animals from the old cage to a new one, filled with dry bedding material, at a predetermined term-time, regardless of the real condition of the bedding. Such unguided process could generate a large volume of waste bedding and consume significant amount of resources. Therefore, a more objective means for monitoring bedding condition could reduce wasting resources.

The cage means for automatically detecting the cage condition can quantify the bedding condition, which is an indication for changing soiled bedding.

The bedding at the cage floor absorbs animal waste materials which contains water and mineral salts. Overtime, moisture and minerals reduce the electric resistance between the pins **101** thus detecting the effective bedding humidity level. The process for generating such materials is significantly slower than that from cage flooding. Therefore, this invention can provide the vivarium staff objective indications for cage/bedding change. Such detection would be monitored by an external controller which can be connected to a warning system typically found inside a vivarium facility.

A couple of electric tabs or tongues, electrically isolated one from each other, are provided inside the cage, each contacting one of said pins **101**. Through said tongues the electric signals are carried, through the pins **101**, outside the cage. The electric resistance of the bedding can be measured at a predetermined time interval, e.g. every half an hour, thus avoiding the possibility to altering the cage conditions, even if the voltage is very low, comprised between 1.5 and 3 Volts. The flooding condition of the cage can therefore be checked automatically and reliably by means of the electric signal provided by the system **40** and cage **101** means, allowing the immediate and effective detection of a potentially dangerous condition.

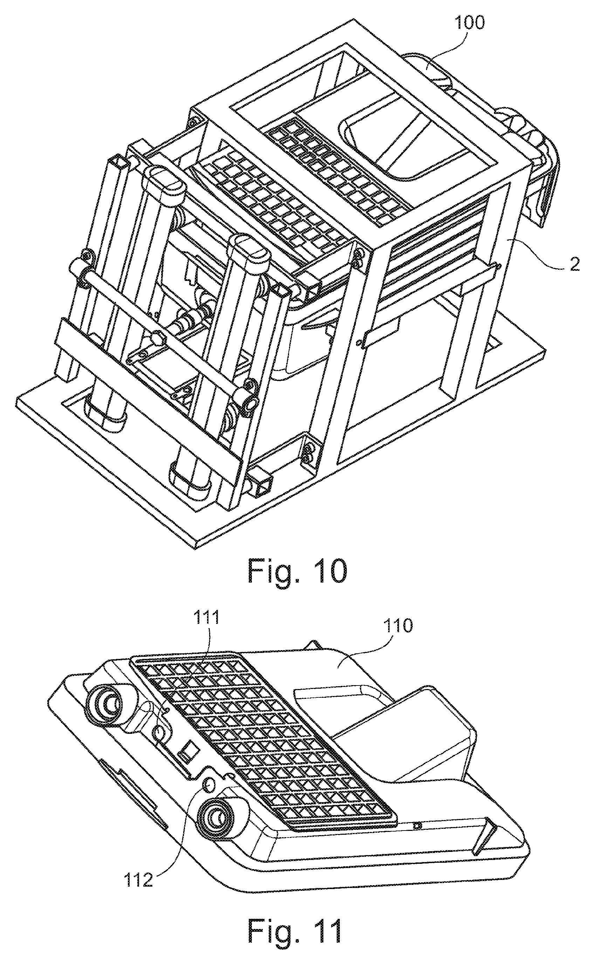

With reference to figures 8 and 10, when the cage **100** is placed on the rack equipped with sensors in its single place, the cage interacts with said plurality of sensors **10** connected to the breadboard **3**, and the automatic watering device **30** is inserted in the cage itself, thus allowing the watering of the animals.

The cage is therefore provided with an opening **102** suitable to receive the watering device **30**, while in the area below the watering device **30**, the cage is provided with the cage means **101** for automatically detecting cage condition, in the bottom surface of the cage.

In order to measure the electric resistance between the pins **101**, the breadboard **3** is provided with system means **40** for the automatic detection of cage condition, in particular with reference to bedding condition and possible flooding condition of the cage. Such system means **40** comprise, in the preferred embodiment shown as an example in figures, a metal plate **40** connected to the breadboard **3** and suitable to contact both the pins **101** in the lower region of the cage.

As per the description above, at least two electrodes should be placed at the cage floor. The electrodes are made of highly conductive materials (e.g. metal) that allow electrical current and can resist typical cage cleaning processes. Furthermore, the electrodes are placed strategically to optimize the sensitivity and specificity of the parameters of interest for measurements.

In its simplest form as described below, electrical resistance can be used to measure humidity condition of the bedding, i.e. to monitor the moisture and, therefore, the dirtiness of the bedding. Additionally, the electrical resistance can be used to measure and promptly detect excessive water being accumulated inside the cage.

If the object is to measure the water accumulation inside a cage, it is possible to provide a bevel or ramped cage bottom so that the water would accumulate at the valley of the bevel and the electrodes are placed strategically there to detect water accumulation. The bevel/ramp should have a very gentle slope so that it would not create a stressful environment for animals.

Another embodiment is to have each electrode placed at one valley on the cage floor. There is a small hump or hill between the two valleys thus creating a physical threshold below which there would not be an electrical connection. With this design, the electrical connection would be detected only when there was sufficient amount of conducting material (e.g. water) rising above the threshold to close the circuit. This feature would be helpful to minimize false alarms.

Another embodiment is to have multiple electrodes. One arrangement is to have four electrodes, each placed close to one corner of the cage. This arrangement would allow for a better spatial mapping of the wetness inside cage. This could potentially compensate for potential issues such as the cage bottom not perfectly flat or uneven distribution of bedding effecting electrical signal.

A control unit has to interrogate if electric current is passed between electrodes to detect impedance of materials between electrodes.

Interrogating electric current does not have to run continuously but at a sampling rate that is meaning to obtain the desired information on the status of cage.

In order to allow the sensors **10** to measure the environmental parameters inside the cage, the top **110** of the cage **100** is provided with sensor holes **111**, **112**, as shown on figure **11**, which allow the possibility to positioning at least part of the sensors **10** inside the cage.

With reference to figure 6a, the place of a cage is provided with lighting means **20**. More in details, the lighting means **20** comprise at least one bank of, preferably two banks of, LED, OLED or incandescent light supports **20a**, **20b** which can be plugged into the holding sockets **3a**, thus protruding outwardly from the breadboard **3**. The light bars **20a**, **20b** are positioned one at each side of the cage, and can host different colours or combinations of colours (e.g. red, white and/or blue lights) and light up the inner part of the cage laterally at the animal's level. The design of the lighting means provides a unique feature where each side of the cage is lighted from one bank of light bar, and the light level and colour can be controlled independently for each cage.

The lighting system is provided with:
a white light source that sufficiently mimics natural day light with maximum light level not to exceed regulatory requirements;
the light cycle can be controlled so that it goes from day to night cycle, the intensity of light would change gradually thus mimicking the light cycle found in nature as opposed to abrupt on/off or light/dark cycles typically found in most holding rooms. This feature is advantageous because certain lab animal species, e.g. rodents, are known to have heightened activity during dawn or dust over the complete darkness night period. Having this dimming feature would encourage animals to better follow their natural instinct;
a "red" light source that provides work light at a cage or rack level that would be sufficiently bright for staff thus helping staff work around a cage during the night cycle for animals;
a "red" and/or "infrared" light source at the cage level to provide lighting for imaging equipment such as video and still-frame cameras which may be placed in or around the cage; the light source should minimize disturbance to animals' normal night/dark cycle activities.

The proposed lighting system could provide more consistent and reliable illumination than conventional lighting at most animal holding rooms. In one embodiment, a continuous light source is used instead of a flickering fluorescent source to minimize unnecessary stress on animals. The status quo for most animal facilities is white light fixtures mounted at the hold room ceiling; these fixtures cannot provide uniform lighting at the individual cage level because of shadowing from cage positioning on a rack, i.e. cages at top of rack would receive significantly high level of light than those at the bottom of rack. Oftentimes, the fixtures would use fluorescent bulbs because of their energy efficiency. However, it is known that flickering from a fluorescent source could induce stress on laboratory animals.

To ensure reliability, the lighting system may include photo sensors sensitive to the white light for the light/dark cycle. Such sensors are used as feedback sensors to ensure the light system is working properly. For example, such feedback sensors could minimize errors from lights being stuck on or off. Sensors can be placed at each cage location or at each row of cages depending on hardware shading and the specific design of the standard rack.

Additionally, the lighting means **20** may also comprise, positioned at the front facing outwardly end of one of the light supports **20a**, **20b** of each cage place, **21**. signal lights is used to indicate multiple low level light sources to signal to vivarium and/or research staff the status of the cage. In one embodiment, the signal lights could be in the form of "Traffic light" that is a couple of lights **21** that are red and green which may convey warning or status messages by combinations of on, off, and blinking frequency.

The "traffic light" can be connected and controlled by several electronic sensors **10**, thus indicating to the staff whether the cage environment is compromised or whether the cage needs attention in general.

The caging system according to the present invention would allow for a well-controlled lighting that is conducive to improving research productivity and vivarium workflow efficiency. It is designed to offer consistent and well controlled lighting for animals to reduce stress on animals and improve research consistency, to enable simple and well illuminated environment for staff to attend animals at cage level during night cycle, to lead the attention of the staff to the cages that need attention with some indication of the situation of the cage, to signal to the staff the access level of each cage thus providing secured controlled access in case that a security system is further provided and associated to the lighting system, to provide special lighting to direct animal activities.

Lighting at cage level is already known in the art, however, one of the object of the present invention is to offer flexible lighting system that can allow for researchers and vivarium staff to achieve consistent and uniform light distribution at cage/tank level for high capacity racking systems while providing easy access for both research and maintenance purposes. There is a need for simple and reliable ways to change out different types of light options. A drawback of the prior art lighting systems is that they are fixed or not designed for easy access and not with ergonomic design that is user and operator friendly.

Therefore, the lighting system comprises a control module that regulates white light parameters such as level/intensity and cycle (simulating more natural light intensity cycle instead of just on/off) for all cages on a rack, and allows user to configure individual cages if necessary; regulates red light - this may tie into room level control system so that when vivarium/research staff needed access to rack during dark cycle, the rack red light will be turned on so that the staff can see well not just at the front of cage but the whole cage, front and back sides; regulates signal/traffic lights - this is the warning/blinking lights at the front portion of each cage to draw staff attention to that particular cage. The sequence and blinking rate of the traffic light would convey certain signals or messages that are meaningful to the staff; regulates optional lights - this could be near-infrared illumination lights for cage level cameras (still shots or videos), or excitation lights for research purposes to illuminate or to stimulate animals.

The control module is user configurable both near the rack or remotely via secured network connections

The lighting system is embedded in the breadboard system described above. At each cage, at least one detachable light bar is connected to the breadboard at the back of the rack.

One specific embodiment of the invention is for the light bar to be connected to the breadboard with a "quarter-turn" connector (easily accessible by a user from front of cage rack) to the corresponding receptacle at the breadboard for easy and quick connect/disconnect for switching lights out for purposes such as cleaning or changing out for optional lights.

The light bar can accommodate a bank of lights at a level that provide sufficient and consistent illumination at each cage. There could be multiple light sources (examples: LEDs or incandescent, etc) along the bank of lights.

Additionally, in a further embodiment, the location of the individual light sources could be adjusted to accommodate detectors such as a camera to achieve optimized imaging or data acquisition requirements.

At the same way there could be more than one light bar per cage location - example, one on each side of the cage - giving both the vivarium management and the researchers the controls to provide optimal and flexible lighting options. One embodiment is to place a centralized light source at the main breadboard and then port light to the light bar via fiber optic cables.

Special connectors are made to ensure reliable connections and high efficient coupling of light from breadboard to the light bars.

The cage is preferably made of the appropriate material that has high optical transmittance to the illuminating lights (white, red and optional lights). The transmittance should be at least 90%, and the physical thickness of the walls of the cage should be consistent across the illuminating area.

It has therefore been shown that the animal caging system according to the present invention achieves the purpose and the objects proposed.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from this invention, including all the equivalent embodiments for a person skilled in the art.

## Claims

1. Animal caging system (1) comprising a standard rack (2) for animal cages (100), **characterized in that** it comprises a detachable breadboard (3), separated from said standard rack (2) and provided with a plurality of universal sockets (3a) to which several devices (10, 20, 30, 40) for the detection of cage condition and/or for the active control of the micro-environment of said cage (100) are connected, thus achieving the separation of parts of the caging system directly interacting with animals from system parts that do not interact with animals directly.

2. Animal caging system (1) according to claim 1, **characterized in that** said devices comprise electric/electronic sensing means (10) suitable to detect/measure physical and/or chemical parameters of the micro-environment of the cage.

3. Animal caging system (1) according to claims 1 or 2, **characterized in that** said breadboard (3) comprises a compartment provided in the rear part thereof and suitable to accommodate and contain all the cables and/or the electric connections to which said devices (10, 20, 40) are connected to.

4. Animal caging system (1) according to one or more of the preceding claims, **characterized in that** said breadboard (3) is in a form of a platform positioned at the rear side of said standard rack (2).

5. Animal caging system (1) according to one or more of the preceding claims, **characterized in that** said breadboard (3) physically protrudes into the space between cages, lateral spaces as well as top and bottom, thus surrounding the cage.

6. Animal caging system (1) according to one or more of the preceding claims, **characterized in that** said breadboard further comprises an electro-mechanical interlock at each cage suitable to avoid unauthorized removal of the cages.

7. Animal caging system (1) according to one or more of the preceding claims, **characterized in that** said breadboard further comprises a controlled access system.

8. Animal caging system (1) according to claim 7, **characterized in that** said controlled access system comprises cage identifier means suitable to read a bar code provided on or embedding in the cage.

9. Animal caging system (1) according to claim 7, **characterized in that** said cage identifier comprises reading means suitable to read a RFID device provided on or embedding in the cage.

10. Animal caging system (1) according to one or more of the preceding claims, **characterized in that** said breadboard is a monolithic unit.

11. Animal caging system (1) according to one or more of the preceding claims from 1 to 9, **characterized in that** said breadboard is a modular structure comprising multiple modular components each accommodating several universal sockets (3a) and defining a single cage place on the standard rack.

12. Animal caging system (1) according to claim 11, **characterized in that** said modular components of said breadboard (3) have inter-locking mechanism to provide proper mechanical alignment and electrical connections between components.

13. Animal caging system (1) according to one or more of the preceding claims, **characterized in that** said sensing means (10), when the cage is assembled to the animal caging system (1), penetrate into sensor holes (111, 112) specially provided on said cage (100).

14. Animal caging system (1) according to one or more of the preceding claims, **characterized in that** said devices (10, 20, 30, 40) for the detection of cage condition further comprise system means (40) for the automatic detection of cage condition suitable to interact with at least two electrode means (101) molded in the cage (100).

15. Animal caging system (1) according to the preceding claim, **characterized in that** said system means for the automatic detection of the condition in the cage comprise a conductive plate (40) connected to said breadboard (3) and adapted to contact at least two electrodes that can be in the shape of buttons or pins (101) made of a conductive material and positioned on the bottom external surface of said cage (100).

16. Animal caging system (1) according to one or more of the preceding claims, **characterized in that** said devices (10, 20, 40) connected to said breadboard (3) further comprise lighting means (20).

17. Animal caging system (1) according to the preceding claim, **characterized in that** said lighting means (20) comprise at least one light support (20a, 20b) which can be plugged into the holding sockets (3a), thus extending outwardly from the breadboard (3), so that when the cage (100) is inserted in the caging system (1) said light support results positioned at one side of the cage, thus lighting up the inner part of the cage laterally at the animal's level and the distal end of said light also embeds warning lights to alert end users on the status of the cage. Such warning lights can have multiple colour and different blinking rate for each colour; together the colour and blinking rate can encode status information to alert users.

18. Animal caging system (1) according to the preceding claim, **characterized in that** said lighting means (20) comprise photo sensors to provide feedback on the light intensity emitted by white light to ensure lighting for simulating light/dark cycle is performing correctly.

19. Animal caging system (1) according to claim 1, **characterized in that** said devices comprises mechanical means (30) for connecting plumbing fittings and devices that distributes drinking water and air flow to support the livelihood of animals inside said cage (100).
